# EUROPÄISCHE PATENTSCHRIFT

(11) **EP 0 894 310 B1**
(45) Veröffentlichungstag und Bekanntmachung des Hinweises auf die Patenterteilung: **01.09.1999**
(21) Anmeldenummer: 97924859.8
(22) Anmeldetag: 09.04.1997
(51) Int. Cl.: G06K 7/06, G06K 13/08

(54) **KARTENLESEVORRICHTUNG**
CARD READING DEVICE
DISPOSITIF DE LECTURE DE CARTES

(30) Priorität: 19.04.1996 DE 19615659
(43) Veröffentlichungstag der Anmeldung: 03.02.1999
(73) Patentinhaber: SIEMENS AKTIENGESELLSCHAFT, 80333 München (DE)
(72) Erfinder: HOOLHORST, Albert, NL-4527 BE Aardenburg (NL); RYCKAERT, Paul, B-9988 Watervliet (BE)
(86) Internationale Anmeldenummer: DE9700718
(87) Internationale Veröffentlichungsnummer: WO9740466

(56) Entgegenhaltungen:
- EP-A- 0 459 584
- DE-A- 3 518 247
- DE-A- 4 010 398
- US-A- 3 777 120
- US-A- 5 257 414

## Beschreibung

Die vorliegende Erfindung betrifft eine Kartenlesevorrichtung gemäß dem Oberbegriff des Patentanspruchs 1.

Kartenlesevorrichtungen gibt es in einer Vielzahl verschiedenster Ausführungen. Eine der möglichen Ausführungsformen ist aus der EP 0 472 692 B1, insbesondere aus den dortigen Figuren 1 bis 3 und der darauf Bezug nehmenden Beschreibung bekannt.

Die in der EP 0 472 692 B1 beschriebene Kartenlesevorrichtung ist zum Lesen von sogenannten SIM-Karten bzw. SIM-Modulen vorgesehen. SIM-Module werden derzeit vor allem in Mobiltelefonen zur Teilnehmeridentifizierung eingesetzt; "SIM" ist dabei die Abkürzung für "Subscriber Identity Module". Die SIM-Module ersetzen insbesondere aufgrund ihrer geringen Abmessungen (25 x 15 mm) zunehmend die früher für diesen Zweck verwendeten, relativ großen Chipkarten.

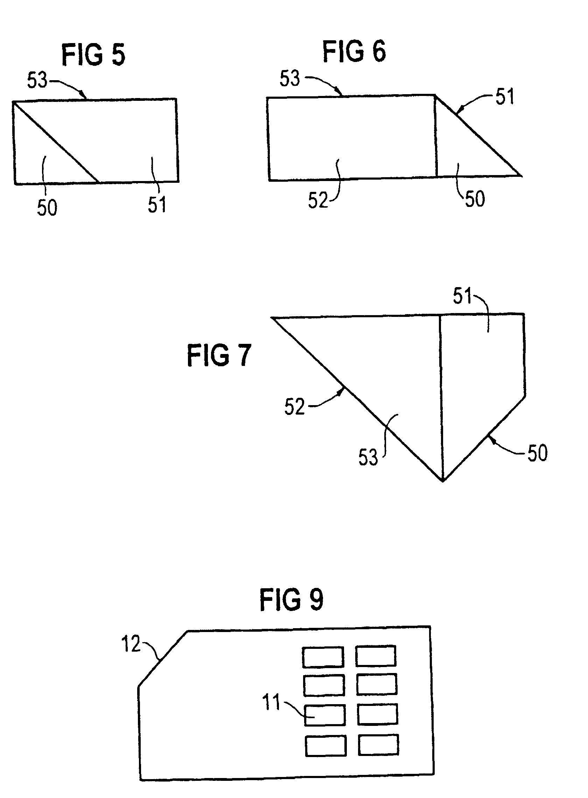

Die Draufsicht auf ein derartiges SIM-Modul ist in Figur 9 gezeigt. Das dort gezeigte SIM-Modul 10 weist an seiner Oberfläche eine Vielzahl (in der Regel 6 oder 8) von in ihrer Lage genau definierten Oberflächenkontakten 11 auf, die durch die Kartenlesevorrichtung zur Ermöglichung eines Informationsaustausches kontaktiert werden müssen. Um ein falsches Einlegen oder Einstecken des SIM-Moduls in die Kartenlesevorrichtung verhindern zu können, weist das im wesentlichen rechteckförmige SIM-Modul in einem seiner Eckabschnitte eine sogenannte (standardisierte) Polarisationsschräge 12 auf.

SIM-Module dieser Art werden in die aus der EP 0 472 692 B1 bekannte Kartenlesevorrichtung, genauer gesagt in deren hierzu vorgesehenen Schacht eingeschoben, wobei bei richtiger Orientierung des SIM-Moduls 10 der die Polarisationsschräge 12 aufweisende Abschnitt des SIM-Moduls nach hinten aus der Kartenlesevorrichtung herausragt und dort mit einem Arretierungsmechanismus in Eingriff bringbar ist.

Der Arretierungsmechanismus wird durch einen von der Kartenlesevorrichtung abgehenden Haltearm und ein an dessen freiem Ende vorgesehenes Arretierungselement in Form eines Anschlages gebildet. Der Anschlag ist derart ausgebildet und positioniert, daß er im bestimmungsgemäß, d.h. richtig orientiert eingesteckten Zustand des SIM-Moduls, und zwar ausschließlich in diesem Zustand, die aus der Kartenlesevorrichtung herausstehende hintere Kante des SIM-Moduls, genauer gesagt im wesentlichen dessen Polarisationsschräge 12 hintergreifen und das SIM-Modul dadurch in dessen Lesestellung arretieren kann.

Der besagte Haltearm ist, um dem Einführen des SIM-Moduls in die und dem Herausnehmen desselben aus der Kartenlesevorrichtung nicht unüberwindbar im Wege zu stehen, von Hand elastisch wegdrückbar.

Das unter manuellem Wegdrücken des Haltearmes erfolgende und dadurch relativ umständlich durchzuführende Einstecken des SIM-Moduls in die Kartenlesevorrichtung und vor allem mögliche Beschädigungen und Fehlfunktionen infolge eines falsch orientierten Einsteckens des SIM-Moduls in die Kartenlesevorrichtung, wogegen der Arretierungsmechanismus erkennbar keinen zuverlässigen Schutz bieten kann, sind verständlicher Weise nicht zu vernachlässigende Probleme.

Eine diesbezüglich deutlich verbesserte Kartenlesevorrichtung ist die Kartenlesevorrichtung gemäß dem Oberbegriff des Patentanspruchs 1. Eine Kartenlesevorrichtung dieser Art ist aus der US 3 777 120 bekannt. Diese Kartenlesevorrichtung weist ein federnd gehaltenes Verriegelungselement auf, das in der Ausgangsstellung derart in den Schacht hineinragt und derart ausgebildet ist, daß die Karte beim Einschieben in den Schacht insbesondere in Abhängigkeit von deren Orientierung beim Einschieben auf einen ersten Bereich oder auf einen zweiten Bereich des Verriegelungselementes treffen kann, wobei das Verriegelungselement beim Auflaufen der Karte auf dessen ersten Bereich unter Freigabe des Schachtes für ein fortgesetztes Einschieben der Karte durch diese wegdrückbar ist, und wobei beim Auflaufen der Karte auf den zweiten Bereich des Verriegelungselementes dieses den Schacht blockiert hält und dadurch ein fortgesetztes Einschieben der Karte verhindert. Ein solches Verriegelungselement ermöglicht es, daß die Karte ausschließlich richtig orientiert in die Kartenlesevorrichtung eingesteckt werden kann. Allerdings ist nach wie vor ein Arretierungsmechanismus zum Arretieren der Karte in der Lesestellung erforderlich, so daß der Aufbau und/oder die Bedienung der Kartenlesevorrichtung relativ kompliziert bleiben.

Der vorliegenden Erfindung liegt daher die Aufgabe zugrunde, die Kartenlesevorrichtung gemäß dem Oberbegriff des Patentanspruchs 1 derart weiterzubilden, daß das Einstecken und Herausnehmen einer Karte wie eines SIM-Moduls oder dergleichen in die bzw. aus der Kartenlesevorrichtung einfach und unter weitestgehendem Ausschluß von Beschädigungen und Fehlfunktionen infolge eines falsch orientierten Einsteckens der Karte in die Kartenlesevorrichtung durchführbar sind.

Diese Aufgabe wird erfindungsgemäß durch die im kennzeichnenden Teil des Patentanspruchs 1 beanspruchten Merkmale gelöst.

Das den Schacht versperrende Verriegelungselement ist ohne besonderes Zutun des Benutzers der Kartenlesevorrichtung automatisch einhergehend mit dem Einschieben der Karte durch diese selbst elastisch wegdrückbar. Genauer gesagt ist es derart ausgebildet, daß es nur bei einer oder mehreren ausgewählten Orientierung(en) der Karte in eine den Schacht passierbar machende Richtung wegdrückbar ist, und daß bei allen anderen Orientierungen der Karte zwar ebenfalls ein Andrücken gegen das Verriegelungselement erfolgt, aber in eine Richtung, längs welcher das Verriegelungselement nicht oder jedenfalls nicht aus dem zum Einschieben der Karte freizumachenden Schachtbereich hinaus verschiebbar ist.

Das Verriegelungselement ist ferner so angeordnet und ausgebildet, daß es nach dem vollständigen Vorbeiführen der Karte unter Hintergreifen derselben automatisch hinter dieser einrastet. Das Verriegelungselement kann somit gleichzeitig als Arretierungselement dienen, das die Karte bei Erreichen deren Lesestellung unter automatischer Rückkehr in die Ausgangsstellung arretiert.

Das Einführen der Karte in die erfindungsgemäße Kartenlesevorrichtung einschließlich der Arretierung der Karte in der Lesestellung ist mithin äußerst einfach zu bewerkstelligen.

Es wurde somit eine Kartenlesevorrichtung geschaffen, durch welche das Einstecken und Herausnehmen einer Karte wie eines SIM-Moduls oder dergleichen in die bzw. aus der Kartenlesevorrichtung einfach und unter weitestgehendem Ausschluß von Beschädigungen und Fehlfunktionen infolge eines falsch orientierten Einsteckens der Karte in die Kartenlesevorrichtung durchführbar sind.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
Figur 1 eine seitliche Schnittansicht einer eine erfindungsgemäße Kartenlesevorrichtung enthaltenden Anordnung,
Figur 2 eine ebenfalls seitliche, aber nicht geschnittene Ansicht der aus der Anordnung gemäß der Figur 1 herausgenommenen Kartenlesevorrichtung,
Figur 3 eine frontale, d.h. gemäß den Darstellungen in den Figuren 1 und 2 jeweils von rechts gesehene Ansicht der aus der Anordnung gemäß der Figur 1 herausgenommenen Kartenlesevorrichtung,
Figur 4 eine gemäß der Darstellung in der Figur 1 von oben gesehene Schnittansicht der dort gezeigten Anordnung,
Figur 5 eine vergrößerte Darstellung der in der Figur 3 gezeigten Ansicht des Verriegelungselementes,
Figur 6 eine vergrößerte Darstellung der in der Figur 1 gezeigten Ansicht des Verriegelungselementes,
Figur 7 eine vergrößerte Darstellung der in der Figur 4 gezeigten Ansicht des Verriegelungselementes,
Figur 8 eine Schnittansicht längs einer Linie C-D in Figur 4, und
Figur 9 eine Draufsicht auf eine SIM-Karte bzw. ein SIM-Modul.

Die im folgenden beschriebene Kartenlesevorrichtung ist zum Entgegennehmen und/oder Weitergeben von durch eine oder für eine SIM-Karte (SIM-Modul) oder dergleichen bereitgestellte Information ausgelegt und geeignet. Sie ist grundsätzlich, d.h. unter entsprechender Anpassung an die veränderten Gegebenheiten jedoch auch für anders geformte und andere Arten von Karten verwendbar, und zwar insbesondere für solche Karten, die mit mechanischen Codierungen wie beispielsweise die Polarisationsschräge der SIM-Module versehen sind.

Der Aufbau und die Funktion von SIM-Modulen wurden bereits eingangs unter Bezugnahme auf die Figur 9 beschrieben.

Aufgabe der vorliegend betrachteten Kartenlesevorrichtung ist es unter anderem, die Oberflachenkontakte 11 des SIM-Moduls 10 zu kontaktieren, um mit diesem kommunizieren zu können. Die elektrische Schaltung zur Steuerung und Auswertung der Kommunikation kann zwar innerhalb des Gehäuses der Kartenlesevorrichtung untergebracht sein, ist aber kein Bestandteil der eigentlichen Kartenlesevorrichtung.

Bei der vorliegend betrachteten Kartenlesevorrichtung ist die entsprechende Steuerungs- und Auswerteelektronik außerhalb der eigentlichen Kartenlesevorrichtung untergebracht.

Die Kartenlesevorrichtung besteht im vorliegenden Ausführungsbeispiel im wesentlichen aus zwei Bestandteilen, nämlich einem Kontaktträgerteil 20 und einem Abdeckteil 30.

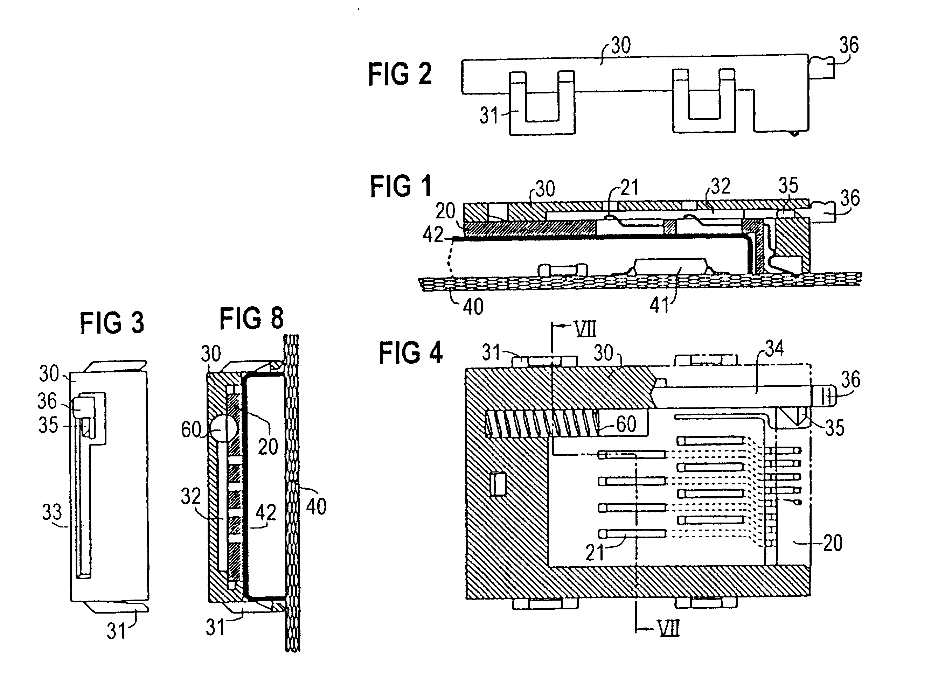

Eine seitliche Schnittansicht einer eine solche Kartenlesevorrichtung enthaltenden Anordnung ist in Figur 1 gezeigt.

Das Kontaktträgerteil 20 weist mehrere Kontaktelemente 21 auf, deren Aufgabe es ist, die Oberflachenkontakte 11 des SIM-Moduls 10 elektrisch mit entsprechenden Anschlüssen einer -elektrischen Leiterplatte 40, auf welcher die Kartenlesevorrichtung und andere elektronische, elektrische und elektromechanische Bauelemente 41 montiert sind, zu verbinden.

Diejenigen Enden der Kontaktelemente 21, die die Oberflachenkontakte 11 des SIM-Moduls 10 kontaktieren sollen, sind als Federkuppen ausgebildet und derart positioniert, daß sie im bestimmungsgemäß eingeschobenen Zustand des SIM-Moduls, d.h. in der Lesestellung desselben dessen Oberflächenkontakte 11 durch ein entsprechendes Aneinanderdrücken (lötfreie Andruckverbindung) zuverlässig und sicher kontaktieren können. Die hierzu im einzelnen vorzusehenden Maßnahmen dürften für einen Fachmann auch ohne weitere Erläuterung nachvollziehbar sein.

Die jeweils anderen Enden der Kontaktelemente 21, also diejenigen Abschnitte der Kontaktelemente 21, die die entsprechenden Anschlüsse der Leiterplatte 40 kontaktieren sollen, sind an die Art und die Positionierung der jeweiligen Anschlüsse auf der Leiterplatte 40 angepaßt. Der Anschluß an die Leiterplatte kann dabei auf unterschiedlichste Art und Weise erfolgen. Übliche Anschlußmethoden umfassen unter anderem ein Verlöten (beispielsweise nach einem SMT-Lötverfahren), ein Verpressen, eine Steckverbindung etc.; im vorliegenden Ausführungsbeispiel sind diese Kontaktelementabschnitte ebenfalls als Federkuppen ausgebildet, wodurch auch diese Verbindung als eine lötfreie Andruckverbindung realisierbar ist.

Im zusammengebauten Zustand der Kartenlesevorrichtung ist über dem Kontaktträgerteil 20 das Abdeckteil 30 angeordnet.

Wie insbesondere aus den Figuren 2 und 3, welche eine seitliche Ansicht (Figur 2) bzw. eine frontale Ansicht (Figur 3) der aus der Anordnung gemäß der Figur 1 herausgenommenen Kartenlesevorrichtung zeigen, ersichtlich ist, weist das Abdeckteil 30 mehrere Rastelemente in Form von Rasthebeln 31 auf, die zur Befestigung des Abdeckteils 30 und des Kontakttragerteils 20 an einer oder in einer die Kartenlesevorrichtung enthaltenden Anordnung, genauer gesagt an deren Gehäuse, Leiterplatte(n), oder sonstigen Komponenten der Anordnung dienen. Im vorliegenden Ausführungsbeispiel erfolgt die Befestigung hauptsächlich durch ein Verrasten der Rasthebel 31 mit entsprechenden Gegenstücken (Rastnasen) an den Seitenwänden eines HF-Abschirmkäfigs 42 auf der Leiterplatte 40.

Der wie beschrieben oder vergleichbar gestaltete Verrastungsmechanismus ist derart ausgebildet und bemessen, daß einhergehend mit der Verrastung des Abdeckteils 30 am Abschirmkäfig 42 das Kontaktträgerteil 20 zwischen diesen Komponenten im wesentlichen unverrückbar in einer definierten (bestimmungsgemäßen) Position eingeklemmt wird.

Wie insbesondere aus der Figur 1 und der später noch beschriebenen Figur 7 ersichtlich ist, ist zwischen dem Abdeckteil 30 und dem Kontakttragerteil 20 ein im wesentlichen schachtartiger Freiraum bzw. Schacht 32 vorhanden, in welchen das SIM-Modul 10 von außen in die Kartenlesevorrichtung (gemäß der Darstellung in der Figur 1 von rechts) einschiebbar ist; die Karteneinsteckseite des Abdeckteils 30 weist hierzu, wie insbesondere aus Figur 3 ersichtlich ist., eine im wesentlichen schlitzartige Einstecköffnung 33 auf.

Um das SIM-Modul einfach in die Kartenlesevorrichtung einfach einschieben, aus dieser herausnehmen und in dessen Leseposition arretieren zu können, ist beim vorliegenden Ausführungsbeispiel ein spezieller, multifunktionaler Verriegelungsmechanismus vorgesehen. Dieser Verriegelungsmechanismus besteht, wie aus den Figuren ersichtlich ist, im wesentlichen aus einem durch den Schacht 32 verlaufenden und schließlich seitlich benachbart zur Einstecköffnung 33 aus der Kartenlesevorrichtung austretenden, elastisch bewegbaren Haltearm 34, der ein Verriegelungselement 35 trägt und an seinem freien, d.h. aus der Kartenlesevorrichtung herausragenden Ende als Betätigungsglied 36 ausgebildet ist.

Der Haltearm 34 hat einen im wesentlichen rechteckförmigen Querschnitt und ist wie das Abdeckteil 30 und wie das Kontaktträgerteil 20, mit dem es im vorliegenden Ausführungsbeispiel eine zusammenhängende, vorzugsweise einstückige Einheit bildet, aus elektrisch nicht leitendem Kunststoff hergestellt.

Aus Figur 4, die eine gemäß der Darstellung in der Figur 1 von oben gesehene Schnittansicht der Kartenlesevorrichtung zeigt, ist ersichtlich, daß der Haltearm 34 entlang des seitlichen Randes des Schachtes 32 verläuft und dabei im wesentlichen außerhalb des Schachtbereiches bleibt, der durch ein eingestecktes oder einzusteckendes SIM-Modul 10 belegt wird.

Das als Verriegelungsnocken ausgebildete Verriegelungselement 35 ist in der Nähe der gemäß den Darstellungen in den Figuren 1, 2 und 4 am rechten Rand vorgesehenen Einstecköffnung 33, d.h. relativ knapp hinter der Einstecköffnung 33 am Haltearm 34 vorgesehen. Das Verriegelungselement 35 ist an einer Seite des Haltearmes 34 vorgesehen, die dem das SIM-Modul aufnehmenden Bereich des Schachtes 32 zugewandt ist und erstreckt sich von dort aus in den das SIM-Modul aufnehmenden Bereich des Schachtes 32 hinein.

Der Aufbau, die Funktion und die Wirkungsweise des Verriegelungselementes 35 werden nachfolgend unter Bezugnahme auf die Figuren 5 bis 7 erläutert, von denen die Figur 5 eine vergrößerte Darstellung der in der Figur 3 gezeigten Ansicht des Verriegelungselementes (Ansicht durch die Einstecköffnung 33 des Abdeckteils 30 hindurch), die Figur 6 eine vergrößerte Darstellung der in der Figur 1 gezeigten Ansicht des Verriegelungselementes, und die Figur 7 eine vergrößerte Darstellung der in der Figur 4 gezeigten Ansicht des Verriegelungselementes 35 zeigen.

Das Verriegelungselement 35 ist ein vielflächiges Gebilde mit einer Vielzahl von Flächenabschnitten, von welchen die wichtigsten in den Figuren 5 bis 7 mit den Bezugszeichen 50 bis 53 bezeichnet sind und deren Anordnung, Funktion und Wirkungsweise den Figuren 5 bis 7 und der nachfolgenden funktionsmäßigen Beschreibung entnommen werden können.

Die betrachtete Kartenlesevorrichtung, genauer gesagt deren Verriegelungselement 35 ist so ausgelegt, daß das SIM-Modul nur in ausgewählten Orientierungen in die Kartenlesevorrichtung eingeschoben werden kann. Die ausgewählten Orientierungen sind beim vorliegenden Ausführungsbeispiel sämtliche Orientierungen, bei denen nicht die Polarisationsschräge 12 des SIM-Moduls 10 derjenige Abschnitt des SIM-Moduls ist, der beim Einschieben desselben in den Schacht 32 auf das den Schacht in der Ausgangsstellung versperrende Verriegelungselement aufläuft.

Die Abläufe beim Einschieben des SIM-Moduls in einer der ausgewählten (ein Einschieben ermöglichenden) Orientierungen wird nachfolgend anhand derjenigen Orientierung des SIM-Moduls beschrieben, die zugleich eine Kontaktierung der Oberflachenkontakte 11 des SIM-Moduls mit den jeweils zugeordneten Kontaktelementen 21 des Kontakttragerteils 20 der Kartenlesevorrichtung ermöglicht. Im betrachteten Ausführungsbeispiel liegt diese, im folgenden als bestimmungsgemäße Orientierung bezeichnete Orientierung des SIM-Moduls 10 dann vor, wenn die Polarisationsschräge 12 des SIM-Moduls im komplett in den Schacht 32 eingesteckten Zustand in dem das Verriegelungselement 35 beherbergenden Abschnitt des Schachtes 32, also gemäß der Darstellung in der Figur 4 rechts oben im Schacht zu liegen kommt.

Das Einschieben des bestimmungsgemäß orientierten SIM-Moduls 10 in den Schacht 32 der Kartenlesevorrichtung vollzieht sich wie folgt:

Die Vorderkante des SIM-Moduls gelangt unter Passieren der Einstecköffnung 33 in den Schacht 32; die Einstecköffnung 33 weist trichterartig aufeinander zulaufende Abschrägungen auf, die das Einführen des SIM-Moduls 10 in die Einstecköffnung 33 erleichtern. Im Schacht 32 angelangt, kommt die Vorderkante des SIM-Moduls 10, genauer gesagt dessen einer Eckbereich sogleich mit dem im Einschubweg stehenden und diesen versperrenden Verriegelungselement 35, genauer gesagt dessen Schrage 51 in Kontakt. Bei fortgesetztem Einschieben des SIM-Moduls 10 läuft bzw. gleitet dessen Vorderkante an der Schräge 51 des Verriegelungselementes 35 entlang (gemäß der Darstellung in den Figuren 1 und 6 nach oben). Damit einhergehend wird das Verriegelungselement 35 zusammen mit dem dieses tragenden Haltearm 34 elastisch (gemäß der Darstellung in den Figuren 1 und 6 nach unten) weggebogen, so daß der Weg für das weitere Einschieben des SIM-Moduls nun frei ist; der Zugang zum Schacht 32 wird also unter Verschieben des Verriegelungselementes 35 aufgedrückt. Bei weiterem Einschieben kommt das SIM-Modul in Kontakt mit einer zwischen dem Kontakttragerteil 20 und dem Abdeckteil 30 eingebetteten (siehe Figur 7) Spiralfeder 60, welche durch fortgesetztes Einschieben des SIM-Moduls elastisch zusammendrückbar ist. Ungefähr mit dem Erreichen der Einstecköffnung durch die hintere Kante des SIM-Moduls 10 gelangt dieses schließlich in seine Lesestellung, d.h. in diejenige Stellung, in welcher die Oberflachenkontakte 11 des SIM-Moduls 10 mit den Kontaktelementen 21 der Kartenlesevorrichtung elektrisch verbunden sind. Ungefähr zeitgleich passiert die Polarisationsschräge 12 des SIM-Moduls 10 das Verriegelungselement 35, was schließlich (bei vollständigem Passieren) die Freigabe des Verriegelungselementes 35 zur Folge hat und diesem die Rückkehr in seine anfängliche (Ausgangs-)Stellung ermöglicht. Das in die Ausgangsstellung zurückgekehrte Verriegelungselement 35 bildet einen das SIM-Modul, genauer gesagt einen im wesentlichen dessen Polarisationsschräge 12 hintergreifenden Anschlag, der nur durch ein von außerhalb der Kartenlesevorrichtung erfolgendes Wegdrücken des Verriegelungselementes 35 (durch eine entsprechende Betätigung des Betätigungsgliedes 36) aus dem Weg geschafft werden kann. Dieser, durch die Fläche 52 des Verriegelungselementes 35 gebildete Anschlag ist nämlich derart ausgebildet und orientiert, daß die Polarisationsschräge 12 des SIM-Moduls frontal unter einem rechten Winkel gegen diesen anstößt, wodurch ein wie beim Einschieben des SIM-Moduls stattfindendes Aneinandergleiten der aufeinandertreffenden Komponenten unter Wegdrücken des Verriegelungselementes 35 ausgeschlossen ist. Die auf das Verriegelungselement 35 wirkenden, beispielsweise von der Spiralfeder 60 stammenden oder aus einem versuchten Herausziehen des SIM-Moduls aus dem Schacht resultierenden Kräfte vermögen auch nicht, das Verriegelungselement 35 in eine andere, den Weg freigebende Richtung wegzudrücken, denn das Verriegelungselement ist bedingt durch dessen Konstruktion nur beschränkt, d.h. gemäß den Darstellungen in den Figuren 1 bis 3 im wesentlichen nur nach unten und/oder oben wegdrückbar bzw. verschiebbar. Das Verriegelungselement 35 sorgt also im Zusammenwirken mit der Spiralfeder 60 dafür, daß das SIM-Modul bei bestimmungsgemäß orientierter Einführung in die Kartenlesevorrichtung und, wie nachfolgend noch erläutert werden wird, nur dann im wesentlichen unverrückbar in der Leseposition arretiert wird.

Zum Herausnehmen des SIM-Moduls aus der Kartenlesevorrichtung muß durch den Benutzer der Vorrichtung das Betätigungsglied 36 des Verriegelungsmechanismus betätigt werden, und zwar durch ein gemäß der Darstellung in den Figuren 1 bis 3 erfolgendes Abwärtsdrücken desselben; die Öffnung im Abdeckteil 30, durch die der als Betätigungsglied 36 ausgebildete Abschnitt des Haltearms 34 nach außerhalb der Kartenlesevorrichtung geführt wird, ist derart bemessen, daß er einerseits eine ausreichend große Abwärtsbewegung erlaubt und andererseits als ein eine übermäßige Abwärtsbewegung verhindernder Anschlag für das Betätigungsglied 36 dienen kann.

Durch das Abwärtsdrücken des Betätigungsgliedes 36 wird der Haltearm 34 elastisch nach unten gebogen, wodurch das daran vorgesehene Verriegelungselement 35 ebenfalls nach unten bewegt wird und so den Weg für das SIM-Modul 10 aus dem Schacht 32 freigibt. Das SIM-Modul wird durch die von der Spiralfeder 60 ausgeübte Kraft so weit aus der Kartenlesevorrichtung herausgeschoben, daß sie der Benutzer mühelos ergreifen und komplett herausziehen kann. Nach dem Herausziehen des SIM-Moduls springt das Verriegelungselement automatisch wieder in seine den Schacht 32 versperrende Ausgangsstellung zurück.

Es wird nun der Fall betrachtet, in dem das SIM-Modul 10 nicht bestimmungsgemäß orientiert, aber in einer ein Einschieben in die Kartenlesevorrichtung ermöglichenden Orientierung in die Kartenlesevorrichtung eingeführt wird.

In diesem Fall verläuft das Einschieben des SIM-Moduls zunächst wie im Fall der bestimmungsgemäßen Orientierung des SIM-Moduls. D.h., der Zugang zum Schacht 32 wird durch das bereits erläuterte Zusammenwirken zwischen der uncodierten Vorderkante des SIM-Moduls 10 und der Schräge 51 des Verriegelungselementes 35 einhergehend mit dem Einschieben des SIM-Moduls automatisch freigedrückt. Bei vollständigem Einschieben des SIM-Moduls in den Schacht 32 hat hier allerdings das SIM-Modul, genauer gesagt dessen auf der Verriegelungselement-Seite ebenfalls uncodierte (nicht die Polarisationsschräge 12 aufweisende) hintere Randabschnitt das Verriegelungselement 35 noch nicht passiert bzw. überquert, so daß dieses nach wie vor in der nach unten weggedrückten Position verbleiben muß und mithin keine Arretierung (kein Hintergreifen) des SIM-Moduls bewirken kann. Das SIM-Modul wird nach dem Loslassen vielmehr durch die Spiralfeder 60 sofort wieder aus der Kartenlesevorrichtung herausgedrückt, also deutlich sichtbar nicht akzeptiert. Dies kann dem Benutzer der Kartenlesevorrichtung als Anzeige für ein nicht bestimmungsgemäß orientiertes Einstecken des SIM-Moduls in die Kartenlesevorrichtung dienen.

Der Versuch des Einsteckens der SIM-Karte in einer kein Einstecken ermöglichenden Orientierung, also der Versuch des Einsteckens im Fall, daß beim Einstecken des SIM-Moduls die Polarisationsschräge 12 auf das Verriegelungselement 35 aufläuft, vollzieht sich wie folgt:

Die Vorderkante des SIM-Moduls gelangt wie auch bei den bisher betrachteten Orientierungen des SIM-Moduls unter Passieren der Einstecköffnung 33 in den Schacht 32. Dort angelangt, trifft sie, genauer gesagt die Polarisationsschräge 12 auf eine Fläche 50 des Verriegelungselementes 35. Anders als die Rampe 51 wirkt die Fläche 50 für das SIM-Modul jedoch als ein nicht überwindbarer Anschlag. Dieser Anschlag ist - wie der vorstehend bereits erläuterte Anschlag in Form der Fläche 52 des Verriegelungselementes 35 - derart ausgebildet und orientiert, daß die Polarisationsschräge 12 des SIM-Moduls frontal und unter Bildung eines rechten Winkels gegen diesen anstößt, wodurch ein wie vorstehend beschriebenes Aneinandergleiten der beim Einschieben des SIM-Moduls aufeinandertreffenden Komponenten, also ein Überqueren des Verriegelungselementes 35 unter Wegdrücken desselben ausgeschlossen ist. Die auf das Verriegelungselement 35 wirkenden Kräfte vermögen auch nicht, das Verriegelungselement 35 in eine andere, den Weg freigebende Richtung wegzudrücken, denn das Verriegelungselement ist - wie vorstehend bereits erwähnt - bedingt durch dessen Konstruktion nur beschränkt, d.h. gemäß den Darstellungen in den Figuren 1 bis 3 im wesentlichen nur nach unten und/oder oben wegdrückbar bzw. verschiebbar. Ein Passieren des Verriegelungselementes 35 durch ein derart eingeführtes SIM-Modul ist dadurch zuverlässig ausgeschlossen. Auf diese Weise kann verhindert werden, daß die Spiralfeder 60 durch die Polarisationsschräge 12 des SIM-Moduls gequetscht und damit unbrauchbar gemacht wird; dies dürfte anhand der Figuren nachvollziehbar sein und bedarf keiner weiteren Erläuterung.

Es versteht sich von selbst, daß auf diese oder ähnliche Weise nicht nur die Spiralfeder 60, sondern auch beliebige andere Abschnitte der Kartenlesevorrichtung und/oder des SIM-Moduls vor Beschädigungen schützen lassen; ebenso sind auf diese Weise Fehlfunktionen infolge von nicht bestimmungsgemäßen elektrischen Verbindungen oder dergleichen verhinderbar.

Die Erfindung ist nicht darauf beschränkt, daß gerade ein Auftreffen der Polarisationsschräge 12 auf das Verriegelungselement 35 die Sperrwirkung des Verriegelungselementes gegen ein Einschieben des SIM-Moduls in den Schacht hervorruft. Durch eine entsprechende Umorientierung der Flächen 50 und 51 kann genau der gegenteilige Effekt, d.h. der Effekt, daß ein Einführen des SIM-Moduls nur bei einem Auftreffen der Polarisationsschräge auf das Verriegelungselement ermöglicht wird, erzielt werden.

Unabhängig hiervon kann - insbesondere in Anpassung an die verwendeten Karte (vor allem die Lage und die Gestaltung des codierten Kartenabschnittes) und/oder der Lage der zu schützenden Bereiche von Kartenlesevorrichtung und/oder Karte - die Position des Verriegelungselementes innerhalb des Schachtes beliebig verändert, also frei gewählt werden.

Darüber hinaus kann es sich unter Umständen auch als vorteilhaft erweisen, nicht nur eine einzige, sondern (an strategisch günstigen Stellen) beliebig viele zusätzliche Verriegelungsmechanismen vorzusehen, welche gleich wie der beschriebene Verriegelungsmechanismus oder anders als dieser gestaltet sein können und auf beliebige Ereignisse gleich oder unterschiedlich reagieren können.

Damit kann bei beliebig ausgebildeten Kartenlesevorrichtungen und Karten stets sichergestellt werden, daß das Einstecken und Herausnehmen einer Karte in die bzw. aus der Kartenlesevorrichtung einfach und unter weitestgehendem Ausschluß von Beschädigungen und Fehlfunktionen infolge eines falsch orientierten Einsteckens der Karte in die Kartenlesevorrichtung durchführbar sind.

## Patentansprüche

1. Kartenlesevorrichtung zum Entgegennehmen oder Weitergeben von durch eine oder für eine Karte (10) bereitgestellten Informationen, mit einem ein Einschieben der Karte in die Kartenlesevorrichtung ermöglichenden Schacht (32), und mit einem federnd gehaltenen Verriegelungselement (35), das in der Ausgangsstellung derart in den Schacht hineinragt und derart ausgebildet ist, daß die Karte beim Einschieben in den Schacht insbesondere in Abhängigkeit von deren Orientierung beim Einschieben auf einen ersten Bereich (51) oder auf einen zweiten Bereich (50) des Verriegelungselementes treffen kann, wobei das Verriegelungselement beim Auflaufen der Karte auf dessen ersten Bereich unter Freigabe des Schachtes für ein fortgesetztes Einschieben der Karte durch diese wegdrückbar ist, und wobei beim Auflaufen der Karte auf den zweiten Bereich des Verriegelungselementes dieses den Schacht blockiert hält und dadurch ein fortgesetztes Einschieben der Karte verhindert,
**dadurch gekennzeichnet,**
daß das Verriegelungselement (35) derart angeordnet und ausgebildet ist, daß es nach dem vollständigen Passieren durch den das Verriegelungselement weggedrückt halten könnenden Kartenbereich automatisch in seine den Schacht (32) versperrende Ausgangsstellung zurückkehrt und dabei eine in den Schacht geschobene Karte (10) hintergreift und dadurch in der Lesestellung arretiert.

2. Kartenlesevorrichtung nach Anspruch 1,
**dadurch gekennzeichnet,**
daß die zu lesende Karte (10) ein eine Polarisationsschräge (12) aufweisendes SIM-Modul ist.

3. Kartenlesevorrichtung nach Anspruch 1 oder 2,
**dadurch gekennzeichnet,**
daß das SIM-Modul (10) beim Einschieben desselben in den Schacht (32) auf den ersten Bereich (51) des Verriegelungselementes (35) trifft, wenn ein die Polarisationsschräge (12) nicht enthaltender Bereich des SIM-Moduls auf das Verriegelungselement aufläuft, und daß das SIM-Modul beim Einschieben desselben in den Schacht auf den zweiten Bereich (50) des Verriegelungselementes trifft, wenn die Polarisationsschräge des SIM-Moduls auf das Verriegelungselement aufläuft.

4. Kartenlesevorrichtung nach einem der vorhergehenden Ansprüche,
**dadurch gekennzeichnet,**
daß der erste Bereich (51) des Verriegelungselementes (35) als eine Schräge ausgebildet ist, an welcher die Karte (10) unter gleichzeitigem Wegdrücken des Verriegelungselementes entlanggleiten kann.

5. Kartenlesevorrichtung nach einem der vorhergehenden Ansprüche,
**dadurch gekennzeichnet,**
daß der zweite Bereich (50) des Verriegelungselementes (35) als ein unverrückbarer Anschlag für den dort auflaufenden Bereich der Karte (10) ausgebildet ist.

6. Kartenlesevorrichtung nach einem der vorhergehenden Ansprüche,
**dadurch gekennzeichnet,**
daß das Verriegelungselement (35) derart angeordnet und ausgebildet ist, daß es beim Passieren durch die Polarisationsschräge (12) in die Ausgangsstellung zurückkehrt und diese dabei derart hintergreift, daß das Verriegelungselement als ein durch die Karte (10) unverrückbarer Anschlag wirkt.

7. Kartenlesevorrichtung nach einem der vorhergehenden Ansprüche,
**dadurch gekennzeichnet,**
daß das Verriegelungselement (35) an einem elastischen, von außerhalb der Kartenlesevorrichtung betätigbaren Haltearm (34) angebracht und zusammen mit diesem bewegbar ist.

8. Kartenlesevorrichtung nach einem der vorhergehenden Ansprüche,
**dadurch gekennzeichnet,**
daß der Schacht (32) ein federndes Element (60) beherbergt, welches beim Einschieben der Karte (10) in den Schacht mit der Karte in Kontakt kommt und auf diese eine gegen die Einschubrichtung gerichtete Kraft ausübt.

## Claims

1. Card reading device for receiving and/or passing on information provided by or for a card (10), having a compartment (32) which makes it possible for the card to be pushed into the card reading device and having a resiliently held locking element (35) which, in the starting position, protrudes into the compartment and is designed in such a way that the card can make contact with a first region (51) or a second region (50) of the locking element when it is pushed into the compartment, in particular in a way dependent on its orientation when it is pushed in; when the card runs onto its first region, the locking element can be pushed away by it, releasing the compartment for continued pushing in of said card, and when the card runs onto the second region of the locking element, the latter keeps the compartment blocked and thereby prevents continued pushing in of the card, characterized in that the locking element (35) is arranged and designed in such a way that, after it has been passed completely by the region of the card which can keep said locking element pushed away, it automatically returns into its starting position, blocking the compartment (32), and thereby grips behind a card (10), which has been pushed into the compartment, and as a result arrests it in the reading position.

2. Card reading device according to Claim 1, characterized in that the card (10) to be read is an SIM module having a polarizing bevel (12).

3. Card reading device according to Claim 1 or 2, characterized in that the SMI module (10), when it is pushed into the compartment (32), meets the first region (51) of the locking element (35) if a region of the SIM module not containing the polarizing bevel (12) runs onto the locking element, and in that the SIM module, when it is pushed into the compartment, meets the second region (50) of the locking element if the polarizing bevel of the SIM module runs onto the locking element.

4. Card reading device according to one of the preceding claims, characterized in that the first region (51) of the locking element (35) is designed as a slope on which the card (10) can slide along, while simultaneously pushing away the locking element.

5. Card reading device according to one of the preceding claims, characterized in that the second region (50) of the locking element (35) is designed as an immovable stop for the region of the card (10) running on there.

6. Card reading device according to one of the preceding claims, characterized in that the locking element (35) is arranged and designed in such a way that, when it is passed by the polarizing bevel (12), it returns into the starting position and grips behind said polarizing bevel in such a way that the locking element acts as a stop which cannot be moved by the card (10).

7. Card reading device according to one of the preceding claims, characterized in that the locking element (35) is fitted on a resilient holding arm (34), which can be actuated from outside the card reading device, and can be moved together with said holding arm.

8. Card reading device according to one of the preceding claims, characterized in that the compartment (32) houses a resilient element (60) which, when the card (10) is pushed into the compartment, comes into contact with said card and exerts on it a force directed counter to the pushing-in direction.

## Revendications

1. Dispositif de lecture de cartes pour obtenir ou transmettre des informations fournies par une carte (10), comportant un puits (32) permettant d'insérer la carte dans le dispositif de lecture de cartes, et comportant un élément (35) de verrouillage maintenu élastiquement qui, dans la position initiale, pénètre dans le puits et est conçu de telle sorte que la carte, lorsqu'elle est insérée dans le puits, peut rencontrer, notamment en fonction de son orientation lors de l'insertion, une première région (51) ou une deuxième région (50) de l'élément de verrouillage, l'élément de verrouillage pouvant, lors de l'arrivée de la carte sur sa première région, être repoussé par la carte en libérant le puits afin de poursuivre l'insertion de la carte, tandis que l'élément de verrouillage, lorsque la carte arrive sur sa deuxième région, maintient le puits bloqué et empêche ainsi la poursuite de l'insertion de la carte,
**caractérisé** en ce que l'élément (35) de verrouillage est disposé et conçu de telle sorte que, une fois qu'il est totalement passé par la région de la carte pouvant maintenir repoussé l'élément de verrouillage, il revient automatiquement dans sa position initiale bloquant le puits (32) et s'engage alors derrière une carte (10) poussée dans le puits, la bloquant ainsi dans sa position de lecture.

2. Dispositif de lecture de cartes suivant la revendication 1, **caractérisé** en ce que la carte (10) à lire est un module SIM comportant un chanfrein (12) de polarisation.

3. Dispositif de lecture de cartes suivant la revendication 1 ou 2, **caractérisé** en ce que le module (10) SIM, lors de son insertion dans le puits (32), rencontre la première région (51) de l'élément (35) de verrouillage si une région du module SIM qui ne contient pas le chanfrein (12) de polarisation arrive sur l'élément de verrouillage, et en ce que le module SIM, lors de son insertion dans le puits, rencontre la deuxième région (50) de l'élément de verrouillage si le chanfrein de polarisation du module SIM arrive sur l'élément de verrouillage.

4. Dispositif de lecture de cartes suivant l'une des revendications précédentes, **caractérisé** en ce que la première région (51) de l'élément (35) de verrouillage est réalisée sous forme de biais, le long duquel la carte peut glisser tout en repoussant l'élément de verrouillage.

5. Dispositif de lecture de cartes suivant l'une des revendications précédentes, **caractérisé** en ce que la deuxième région (50) de l'élément (35) de verrouillage est réalisée sous forme de butée immuable pour la région de la carte (10) qui arrive sur elle.

6. Dispositif de lecture de cartes suivant l'une des revendications précédentes, **caractérisé** en ce que l'élément (35) de verrouillage est disposé et conçu de telle sorte que, lorsqu'il est passé par le chanfrein (12) de polarisation, il revient dans la position initiale et s'accroche alors derrière le chanfrein de telle sorte que l'élément de verrouillage joue le rôle de butée immuable pour la carte (10).

7. Dispositif de lecture de cartes suivant l'une des revendications précédentes, **caractérisé** en ce que l'élément (35) de verrouillage est monté sur un bras (34) de support élastique, pouvant être actionné de l'extérieur du dispositif de lecture de cartes, et peut être déplacé conjointement avec ce bras.

8. Dispositif de lecture de cartes suivant l'une des revendications précédentes, **caractérisé** en ce que le puits (32) loge un élément (60) élastique, qui entre en contact avec la carte (10) lorsqu'elle est insérée dans le puits et qui exerce sur cette carte une force dirigée à l'encontre de la direction d'insertion.
